# EUROPÄISCHE PATENTANMELDUNG

(11) **EP 4 684 629 A1**
(43) Veröffentlichungstag der Anmeldung: **28.01.2026**
(21) Anmeldenummer: 25184374.4
(22) Anmeldetag: 23.06.2025
(51) Int. Cl.: A01D 43/08

(54) **SELBSTFAHRENDE ERNTEMASCHINE**

(30) Priorität: 22.07.2024 DE 102024120749
(71) Anmelder: CLAAS Selbstfahrende Erntemaschinen GmbH, 33428 Harsewinkel (DE)
(72) Erfinder: Neitemeier, Dennis, 59510 Lippetal (DE); Dr. Belau, Sven Carsten, 33332 Gütersloh (DE); Dr. Bönig, Ingo, 33330 Gütersloh (DE); Brune, Markus, 33428 Harsewinkel (DE); Titkemeier, Daniel, 49080 Osnabrück (DE); Dirksen, Matthis, 48231 Warendorf (DE)
(74) Vertreter: CLAAS Gruppe

(57) **Zusammenfassung**

Die vorliegende Erfindung betrifft eine selbstfahrende Erntemaschine (1), wobei die Erntemaschine (1) ein Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeiteten Erntegutes (2) sowie ein Kamerasystem (16) zur Erfassung von Bildern (41) eines die Erntemaschine (1) durchlaufenden Erntegutstromes (21) und eine Bildauswertungsvorrichtung (27) zur Auswertung der Bilder (41) umfasst, wobei die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an Verunreinigungen zu analysieren, wobei die Bildauswertungsvorrichtung (27) dazu eingerichtet ist, den ermittelten Anteil an detektierten Verunreinigungen georeferenziert unter Verwendung von Positionsdaten (58), die ein Positionsortungssensor (57) der Erntemaschine (1) zur fortlaufenden Bestimmung einer geografischen Position auf einem zu bearbeitenden Feld (60) bereitstellt, zu kartieren.

## Beschreibung

Die vorliegende Erfindung betrifft eine selbstfahrende Erntemaschine gemäß dem Oberbegriff des Anspruches 1. Weiterhin betrifft die Erfindung ein Verfahren zur Kartierung von im Erntegut enthaltenen Verunreinigungen gemäß dem Oberbegriff des Anspruches 15.

Aus der EP 1 639 878 A2 ist eine als Feldhäcksler ausgeführte selbstfahrende Erntemaschine bekannt. Der Feldhäcksler umfasst ein Vorsatzgerät zur Aufnahme von Erntegut, Arbeitsaggregate zur Bearbeitung des aufgenommenen Erntegutes, eine Überladevorrichtung zur Abgabe des bearbeitenden Erntegutes, sowie einen optischen Sensor, der im nahen Infrarotbereich arbeitet und zur Erfassung von Bildern eines die Erntemaschine durchlaufenden Erntegutstromes eingerichtet ist und eine Steuereinrichtung zur Auswertung der Bilder umfasst. Die Steuereinrichtung ist dazu eingerichtet ist, die Bilder des Erntegutstroms auf einen mit der Aufnahme des Erntegutes durch das Vorsatzgerät aufgenommenen, im Erntegutstrom enthaltenen Anteil an Verunreinigungen zu analysieren. Die Inhaltsanalyse des Erntegutstromes wird von der Steuereinrichtung dazu verwendet, um die Schnitthöhe des Vorsatzgerätes durch Ansteuerung anzupassen. Dies dient der Reduzierung der Verschmutzung im Grünfutter des laufenden, durch den Feldhäcksler aktuell auszuführenden Ernteprozesses.

Ausgehend vom vorstehend genannten Stand der Technik liegt der Erfindung die Aufgabe zugrunde, eine selbstfahrende Erntemaschine bereitzustellen, welche die Analysedaten einer Verwendung durch nachfolgend das Feld bearbeitenden Arbeits- und/oder Erntemaschinen zugänglich macht.

Diese Aufgabe wird erfindungsgemäß durch eine selbstfahrende Erntemaschine mit den Merkmalen des Anspruches 1 gelöst. Weiterhin wird die Aufgabe durch ein Verfahren zur Kartierung von im Erntegut enthaltenen oder beim Aufnehmen des Erntegutes aufgenommen Verunreinigungen beim Bearbeiten eines Feldes mit den Merkmalen des nebengeordneten Anspruches 15 gelöst. Vorteilhafte Weiterbildungen sind Gegenstand der abhängigen Ansprüche.

Gemäß dem Anspruch 1 wird eine selbstfahrende Erntemaschine vorgeschlagen, welche ein Vorsatzgerät zur Aufnahme von Erntegut, Arbeitsaggregate zur Bearbeitung des aufgenommenen Erntegutes, eine Überladevorrichtung zur Abgabe des bearbeiteten Erntegutes sowie ein Kamerasystem zur Erfassung von Bildern eines die Erntemaschine durchlaufenden Erntegutstromes und eine Bildauswertungsvorrichtung zur Auswertung der Bilder umfasst, wobei die Bildauswertungsvorrichtung dazu eingerichtet ist, die Bilder des Erntegutstroms auf einen mit der Aufnahme des Erntegutes durch das Vorsatzgerät aufgenommenen, im Erntegutstrom enthaltenen Anteil an Verunreinigungen zu analysieren. Erfindungsgemäß ist vorgesehen, dass die Bildauswertungsvorrichtung dazu eingerichtet ist, den ermittelten Anteil an detektierten Verunreinigungen georeferenziert unter Verwendung von Positionsdaten, die ein Positionsortungssensor der Erntemaschine zur fortlaufenden Bestimmung einer geografischen Position auf einem zu bearbeitenden Feld bereitstellt, zu kartieren.

Bevorzugt kann die Bildauswertungsvorrichtung dazu eingerichtet sein, einen im Erntegutstrom enthaltenen Anteil an Verunreinigungen mittels eines Maschinenlernalgorithmus zu analysieren, wobei der Maschinenlernalgorithmus zumindest ein trainierbares neuronales Netzwerk zur Analyse der Bilder umfasst. Dies ermöglicht es, den im Erntegutstrom enthaltenen Anteil an Verunreinigungen mittels des Maschinenlernalgorithmus im laufenden Erntebetrieb automatisch durch die Bildauswertungsvorrichtung zu analysieren. Die Analyse mittels des Maschinenlernalgorithmus ermöglicht es, kostengünstig einen Verunreinigungsgrad des Erntegutes zu qualifizieren und/oder zu quantifizieren. Insbesondere kann die Analyse in Echtzeit durchgeführt werden.

Weiter bevorzugt kann das zumindest eine neuronale Netzwerk als Basis ein EfficientNet, insbesondere EfficientNetB0, als Architektur und Skalierungsmethode für faltungsneuronale Netze verwenden. Neuronale Faltungsnetzwerke oder auch Convolutional Neural Network (CNN) wie das EfficientNet erzielen in der Bildverarbeitung besonders gute Ergebnisse. EfficientNet skaliert alle Dimensionen von Tiefe/Breite/Auflösung einheitlich mit einem zusammengesetzten Koeffizienten. Im Gegensatz zur herkömmlichen Praxis bei der Verwendung eines neuronalen Faltungsnetzwerkes, bei der diese Faktoren willkürlich skaliert werden, skaliert die EfficientNet-Skalierungsmethode die Netzwerkbreite, -tiefe und -auflösung einheitlich mit einer Reihe fester Skalierungskoeffizienten. Die zusammengesetzte Skalierungsmethode ist durch die Intuition gerechtfertigt, dass das Netzwerk bei einem größeren Eingangsbild mehr Schichten benötigt, um das rezeptive Feld zu vergrößern, und mehr Kanäle, um mehr feinkörnige Muster auf dem größeren Bild zu erfassen.

Insbesondere kann das zumindest eine neuronale Netzwerk zur Analyse der von dem Kamerasystem empfangenen Bilder einen direkten Algorithmus verwenden, welcher als Eingangsgröße die Bilder im Rohdatenformat verwendet, die Bilder direkt einer Klassifizierung durch das zumindest eine neuronale Netzwerk unterzieht und als Ausgangsgröße eine der Kontaminationsklassen bestimmt. Der von dem neuronalen Netzwerk verwendete direkte Algorithmus verarbeitet die Bilder des Kamerasystems unmittelbar, d.h. ohne eine Vorverarbeitung durch semantische Segmentierung, um die Klassifizierung unmittelbar durchzuführen, mit der die Kontaminationsklasse als Ausgangsgröße bestimmt wird. Die Kontaminationsklassen korrelieren mit unterschiedlichen Verunreinigungsgraden.

Gemäß einer alternativen Weiterbildung kann das zumindest eine neuronale Netzwerk zur Analyse der von dem Kamerasystem empfangenen Bilder einen hybriden Algorithmus verwenden, welcher als Eingangsgröße die Bilder im Rohdatenformat verwendet, die Bilder einer semantischen Segmentierung durch das neuronale Netzwerk unterzieht und als Ausgangsgröße aus den pixelweise segmentierten Bildern extrahierte Merkmale einem zweiten neuronalen Netzwerk als Eingangsgrößen zuführt, welches aus den extrahierten Merkmalen als Ausgangsgröße die Kontaminationsklasse bestimmt.

Hierzu kann das zumindest eine neuronale Netzwerk die von dem Kamerasystem empfangenen Bilder pixelweise segmentieren, indem jedem Pixel eine Klasse zugewiesen wird, welche als eine in der Bildauswertungsvorrichtung hinterlegte Eigenschaft definiert ist.

Dabei kann als eine Klasse die Eigenschaft "Boden" und als zumindest eine weitere Klasse die Eigenschaft "Erntegut" hinterlegt sein. Eine Reduktion auf nur zwei Eigenschaften vereinfacht den Vorgang der semantischen Segmentierung durch das zumindest eine neuronale Netzwerk.

Insbesondere können in der Speichereinheit hinterlegte zu extrahierende Merkmale aus der Merkmalsgruppe Segmentierungsverhältnis, Polygonanzahl, mittlere Polygongröße, Standardabweichung der Polygongrößenverteilung, kleinste Polygongröße und größte Polygongröße sein. Hierzu können in dem jeweils pixelweise segmentierten Bild vorhandenen Polygone, die segmentierte Pixeln der Klasse "Boden" enthalten, mittels eines Konturensuch-Algorithmus bestimmt werden.

Bevorzugt kann das zweite neuronale Netzwerk ein neuronales Netz mit einem Input-Layer, einem Hidden-Layer und einem Output-Layer sein.

Insbesondere kann das zumindest eine neuronale Netzwerk für die Bestimmung der Kontaminationsklasse zumindest drei zeitlich aufeinanderfolgend empfangene Bilder des Erntegutstroms auswerten, wobei die Ausgabe der Ergebnisse als gewichteter Mittelwert erfolgt. Dadurch lässt sich, unabhängig davon, ob der direkte Algorithmus oder der hybride Algorithmus verwendet wird, ein statistisch robuster Ausgabewert generieren.

Des Weiteren kann eine Auswahl eines der zumindest drei zeitlich aufeinanderfolgenden Bilder des Erntegutstroms erfolgen, für welches die Kontaminationsklasse bestimmt werden soll, wobei das ausgewählte Bild bei der Mittelwertbildung eine höhere Gewichtung aufweist als die zumindest zwei weiteren Bilder. Dabei kann das ausgewählte Bild mit 40% und die beiden anderen Bilder können mit 30 % gewichtet werden. Vorzugsweise ist das ausgewählte Bild das zweite Bild, der drei in zeitlicher Abfolge nacheinander aufgenommenen Bilder.

Gemäß einer bevorzugten Weiterbildung kann die Bildauswertungsvorrichtung eine Recheneinheit, eine Speichereinheit sowie eine Kartierungseinheit umfassen, wobei in der Speichereinheit mehrere Kontaminationsklassen hinterlegt sind, die unterschiedliche Verunreinigungsgrade definieren, welche vom Massegehalt an anorganischen Verunreinigungen in der Trockenmasse des Erntegutes abhängig sind, wobei die Kartierungseinheit die von dem Positionsortungssensor bereitgestellten Positionsdaten mit der bestimmten Kontaminationsklasse und/oder dem bestimmten Verunreinigungsgrad verknüpft, die mit den Positionsdaten zeitlich korrelieren, und in einer in der Speichereinheit hinterlegten oder in einer durch die Kartierungseinheit zu generierenden Karte aufzeichnet.

Insbesondere können die zu detektierenden anorganischen Verunreinigungen Sand, erdige Bestandteile wie Humus oder sonstige Bodenbestandteile umfassen. Diese Verunreinigungen des Erntegutes können unter anderem ihre Ursache in der Einstellung von Arbeits- und Erntemaschinen haben, die in Vorbereitung und Durchführung des Ernteprozesses zum Einsatz kommen. Insbesondere können nicht optimal eingestellte Arbeits- und Erntemaschinen zu einem vermehrten Eintrag an anorganischen Verunreinigungen in das während des Erntevorgangs aufzunehmende Erntegut beitragen. Weitere Einflussfaktoren sind Umwelteinflüsse wie Starkregen oder Trockenheit, durch welche es verstärkt zu Verunreinigungen des Erntegutes kommen kann. Ein weiterer Aspekt kann in der Topografie des zu bearbeitenden Feldes bestehen, die einen Antrag an Verunreinigungen an das Erntegut begünstigen kann. Die georeferenzierte Kartierung ermöglicht es, Verunreinigungen des Erntegutes, die auf in der Vergangenheit liegende Ereignisse zurückgehen, zu bestimmen und zu dokumentieren.

Des Weiteren kann die Kartierungseinheit dazu eingerichtet sein, von einer externen Datenquelle eine bestehende Karte des zu bearbeitenden Feldes abzurufen oder anhand der von dem Positionsortungssensor bereitgestellten Positionsdaten und/oder mittels einer optischen Erfassungsvorrichtung aufgezeichneten, von der Erntemaschine abgefahrenen Fahrspuren eine Karte des Feldes zu erstellen. Die bestimmten und/oder erfassten Fahrspuren werden als Fahrspurdaten abgespeichert.

Gemäß einem weiteren vorteilhaften Aspekt kann die Kartierungseinheit dazu eingerichtet sein, die georeferenziert aufgezeichneten Verunreinigungen ihrer Zuordnung zu einer der bestimmten Kontaminationsklassen und/oder dem bestimmten Verunreinigungsgrad VG entsprechend voneinander grafisch unterscheidbar darzustellen.

Gemäß einer bevorzugten Weiterbildung kann die Kartierungseinheit dazu eingerichtet sein, die georeferenziert aufgezeichneten Verunreinigungen ihrer Zuordnung zu einer der bestimmten Kontaminationsklassen und/oder dem bestimmten Verunreinigungsgrad entsprechend in Abhängigkeit von der Arbeitsbreite des Vorsatzgerätes zu segmentieren und einzelne Segmente voneinander grafisch unterscheidbar in der Karte darzustellen.

Weiter bevorzugt kann die Kartierungseinheit dazu eingerichtet sein, die Karte, in welcher der ermittelte Anteil an Verunreinigungen georeferenziert aufgezeichnet wurde, an eine Datenverarbeitungsvorrichtung einer anderen landwirtschaftlichen Arbeits- und/oder Erntemaschine, welche das Feld nachfolgend bearbeitet, und/oder an ein Farmmanagementsystem zur Planung von nachfolgenden Bearbeitungsschritten zu übertragen.

Die eingangs gestellte Aufgabe wird weiterhin durch ein Verfahren mit den Merkmalen des Anspruches 15 gelöst.

Gemäß dem Anspruch 15 wird ein Verfahren zur Kartierung von im Erntegut enthaltenen oder beim Aufnehmen des Erntegutes aufgenommen Verunreinigungen beim Bearbeiten eines Feldes vorgeschlagen, wobei das Erntegut durch die Erntemaschine mittels eines Vorsatzgerätes aufgenommen, durch Arbeitsaggregate der Erntemaschine bearbeitet und durch eine Überladevorrichtung abgegeben wird, wobei Bilder eines die Erntemaschine durchlaufenden Erntegutstromes durch ein an der Überladevorrichtung angeordnetes Kamerasystem erfasst und durch eine Bildauswertungsvorrichtung ausgewertet werden, wobei die Bilder des Erntegutstroms durch die Bildauswertungsvorrichtung auf einen mit der Aufnahme durch das Vorsatzgerät aufgenommenen, im Erntegutstrom enthaltenen Anteil an Verunreinigungen analysiert werden. Das Verfahren ist dadurch gekennzeichnet, dass der ermittelte Anteil an detektierten Verunreinigungen durch eine Kartierungseinheit unter Verwendung von Positionsdaten, die ein Positionsortungssensor der Erntemaschine zur fortlaufenden Bestimmung einer geografischen Position auf einem zu bearbeitenden Feld bereitstellt, georeferenziert kartiert wird. Auf die erfindungsgemäßen Ausführungen zur selbstfahrenden Erntemaschine darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine erfindungsgemäße selbstfahrende Erntemaschine;
- Fig. 2: exemplarisch eine schematische Darstellung einer Bildauswertungsvorrichtung;
- Fig. 3: exemplarisch eine schematische Darstellung einer Bildauswertungsvorrichtung gemäß einer alternativen Ausführung;
- Fig. 4: exemplarisch ein mittels eines hybriden Algorithmus gemäß Fig. 3 durch ein neuronales Netzwerk segmentiertes Bild; und
- Fig. 5: schematisch und exemplarisch eine mittels einer Kartierungseinheit erstellte und Karte eines bearbeiteten Feldes; und
- Fig. 6: schematisch und exemplarisch eine Darstellung einer durch eine Eingabe-Ausgabe-Einheit ausgegebenen Ansicht des Feldes während des Bearbeitungsvorgangs.

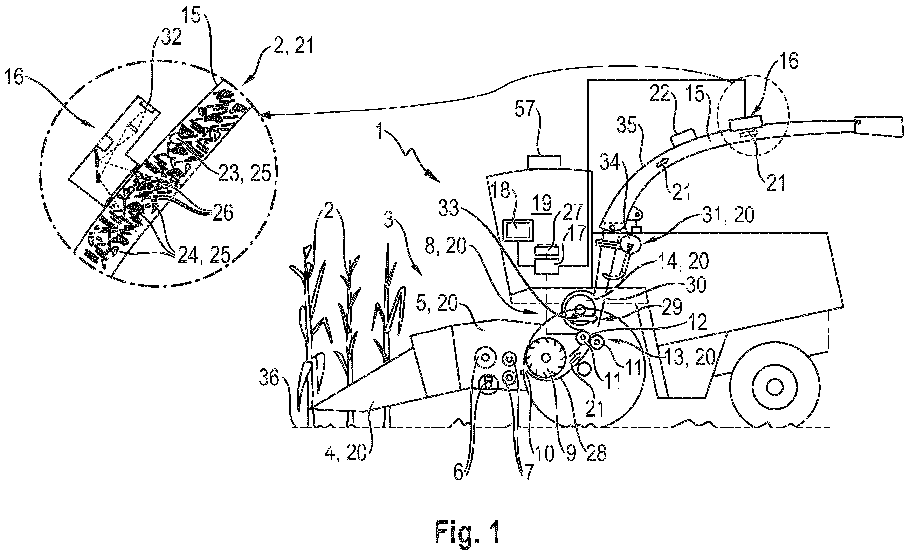

Fig. 1 zeigt schematisch und exemplarisch eine erfindungsgemäße selbstfahrende Erntemaschine 1, hier und vorzugsweise einen Feldhäcksler, beim Abernten und Aufnehmen eines Bestandes von Erntegut 2, beispielsweise Maispflanzen, Gras oder Ganzpflanzensilage als Grünfutter, auf einem Feld 60. Eine Aufnahmevorrichtung 3 der Erntemaschine 1 umfasst in an sich bekannter Weise ein in Anpassung an das zu erntende bzw. aufzunehmende Erntegut 2 austauschbares Vorsatzgerät 4 und eine Einzugseinrichtung 5 mit mehreren Walzenpaaren 6, 7. Die Einzugseinrichtung 5 übernimmt das Erntegut 2 von dem Vorsatzgerät 4, um es einer Häckselvorrichtung 8 zuzuführen. Das aufgenommene Erntegut 2 durchläuft die Erntemaschine 1 als - durch Pfeile veranschaulichter - Erntegutstrom 21.

Das Vorsatzgerät 4 kann beispielsweise als Maisgebiss ausgeführt sein, um stängeliges Erntegut 2 zu ernten oder als Pick-Up, welche auf dem Feld 60 in Schwaden abgelegtes Erntegut 2, insbesondere Gras, aufnimmt. Das an der Erntemaschine 1 angeordnete Vorsatzgerät 4 kann auch einen Mähbalken mit Einzugsschnecke aufweisen, um das Gras in einem Arbeitsgang zu mähen und aufzunehmen.

Die Häckselvorrichtung 8 umfasst eine drehangetriebene Häckseltrommel 9, eine Gegenschneide 10, über welche das Erntegut 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Mittels einer Aktorik ist ein Abstand eines Trommelbodens 28, der die Häckseltrommel 9 in Umfangsrichtung abschnittsweise umgibt, verstellbar.

Der Häckselvorrichtung 8 ist eine optionale Nachzerkleinerungsvorrichtung 13, auch als Corn-Cracker bezeichnet, mit einem Paar von Konditionier- oder Crackerwalzen 11 nachgeordnet, die im Auswurfkanal 29 entnehmbar und/oder ausschwenkbar angeordnet ist. Die Konditionierwalzen 11 begrenzen einen Spalt 12 von verstellbarer Breite und rotieren mit unterschiedlichen Geschwindigkeiten, um in dem durch den Spalt 12 hindurchtretenden Materialstrom enthaltene Körner zu zerkleinern.

Ein Nachbeschleuniger 14 verleiht dem zerkleinerten und in der optionalen Nachzerkleinerungsvorrichtung 13 konditionierten Erntegutstrom 21, die notwendige Geschwindigkeit, um eine als Auswurfkrümmer 15 ausgeführte Überladevorrichtung zu durchlaufen und in ein (nicht dargestelltes) Begleitfahrzeug übergeladen zu werden. Der Nachbeschleuniger 14 ist in einem zur gegenüberliegenden Wandung 30 des Auswurfkanals 29 veränderbaren Abstand angeordnet. Der Nachbeschleuniger 14 kann in horizontaler Richtung näher an die Wandung 30 heran oder von dieser weg bewegt werden, was durch einen Pfeil 33 veranschaulicht ist.

Dem Nachbeschleuniger 14 nachgeordnet kann eine Siliermitteldosiervorrichtung 31 angeordnet sein, die mittels einer ansteuerbaren Förderpumpe 34 mit veränderlichem Fördervolumen eine Flüssigkeit in den Auswurfkanal 29 einbringt.

Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche den durch den Auswurfkrümmer 15 hindurch geförderten Erntegutstrom 21 seitlich begrenzen und führen.

An dem Auswurfkrümmer 15 ist zumindest ein Kamerasystem 16 angeordnet, um Bilder 41 des durch den Auswurfkrümmer 15 hindurch geförderten Erntegutstroms 21 zu erzeugen. Weiterhin kann auf dem Auswurfkrümmer 15 ein NIR-Sensor 22 angeordnet sein.

Mittels des NIR-Sensors 22 lassen sich Ernteguteigenschaften bestimmen. Der NIR-Sensor 22 ist hier und bevorzugt dem Kamerasystem 16 vorgeordnet auf der Oberseite 35 des Auswurfkrümmers 16 positioniert.

Das Vorsatzgerät 4, die Einzugsvorrichtung 5, die Häckselvorrichtung 8, die optionale Nachzerkleinerungsvorrichtung 13, der Nachbeschleuniger 14 sowie die Siliermitteldosiervorrichtung 31 und deren jeweilige Komponenten sind Arbeitsaggregate 20 der Erntemaschine 1, die dem Abernten bzw. Aufnehmen des Erntegutes 2 eines Feldbestandes und/oder der Bearbeitung des Erntegutes 2 im Rahmen des durchzuführenden Ernteprozesses dienen.

Der von den Arbeitsaggregaten 20 der Erntemaschine 1 bearbeitete Erntegutstrom 21 weist in Abhängigkeit von der Erntegutart eine unterschiedliche Zusammensetzung auf. So sind bei Mais als Erntegutart im Wesentlichen ganze Körner 23 und zerkleinerte Körner 24 als Kornbestandteile 25 sowie Nicht-Kornbestandteile 26, wie Stängel, Blätter und dergleichen, im Erntegutstrom 21 enthalten. Bei der Erntegutart Gras enthält der Erntegutstrom 21 im Wesentlichen nur geschnittenes Gras als Erntegut 2.

Zusätzlich gelangen durch das Vorsatzgerät 4 mit dem aufgenommenen Erntegut 2 an dem Erntegut 2 anhaftende Verunreinigungen oder, bei zu geringem Abstand zum Feldboden 36, vom Vorsatzgerät 4 selbst aufgenommene Verunreinigungen in den die Erntemaschine 1 durchlaufenden Erntegutstrom 21. An dem Erntegut 2 anhaftende Verunreinigungen können unter anderem auf einen vorangehenden Bearbeitungsprozess auf dem Feld 60 zurückgehen. Beispielhaft hierfür sind im Fall der Grasernte das Mähen, Wenden sowie Schwaden als vorangehende Bearbeitungsprozesse zu nennen.

Das an dem Auswurfkrümmern 15 angeordnete zumindest eine Kamerasystem 16 weist zumindest eine Kamera 32 zur Aufnahme von Bildern 41 des im Erntegutstrom 21 enthaltenen Ernteguts 2 auf. Die Kamera 32 kann als eine Multispektralkamera ausgeführt sein, die Licht mit mindestens drei unterscheidbaren Wellenlängenbereichen aufnimmt. Alternativ kann die Kamera 32 kann als Hyperspektralkamera ausgeführt sein. Insbesondere kann die Kamera 32 sichtbares Licht und infrarotes Licht, insbesondere nah-infrarotes Licht, aus unterschiedlichen Wellenlängenbereichen aufnehmen.

Die Bilder 41 werden im Rohdatenformat abgespeichert. Die zumindest eine Kamera 32 nimmt ortsaufgelöst Bilder 41 auf. Der Begriff "ortsaufgelöst" bedeutet hier, dass es mittels der Bildern 41 möglich ist, Einzelheiten des Ernteguts 2 sowie Verunreinigungen voneinander zu unterscheiden. Die Kamera 32 weist also zumindest genügend Pixel auf, um eine noch zu erläuternde Analyse der Bilder 41 durch die Bildauswertungsvorrichtung 27 zu ermöglichen. Das Kamerasystem 16 erfasst in einer Messroutine mittels der Kamera 32 mehrere Bilder 41 des Ernteguts 2 sowie der im Erntegutstrom 21 mitgeführten Verunreinigungen. Diese Messroutine wird entsprechend während des Betriebs der Erntemaschine 1 durchgeführt.

Die Bildauswertungsvorrichtung 27 ist mit einem Fahrerassistenzsystem 17 verbunden oder kann als Bestandteil des Fahrerassistenzsystems 17 ausgeführt sein. Das Fahrerassistenzsystem 17 weist einen Speicher 39 zum Hinterlegen von Daten und eine Rechenvorrichtung 40 zur Verarbeitung der in dem Speicher 39 hinterlegten Daten auf. Das Fahrerassistenzsystem 17 kann mit einer Eingabe-Ausgabe-Einheit 18 in einer Fahrerkabine 19 der Erntemaschine 1 verbunden sein, um Auswertungsergebnisse darauf auszugeben. Das Fahrerassistenzsystem 17 steuert zumindest ein Stellglied zum Einstellen eines der Arbeitsaggregate 20 an. Auf dem Dach der Fahrerkabine 19 kann zumindest ein Positionsortungssensor 57 angeordnet sein. Andere und/oder zusätzliche Positionen des zumindest einen Positionsortungssensor 57 an der Erntemaschine 1 sind denkbar.

Die Bildauswertungsvorrichtung 27 ist dazu eingerichtet, die Bilder 41 des Erntegutstroms 21 auf einen mit der Aufnahme des Erntegutes 2 durch das Vorsatzgerät 4 aufgenommenen, im Erntegutstrom 21 enthaltenen Anteil an anorganischen Verunreinigungen mittels eines Maschinenlernalgorithmus zu analysieren.

Die Bildauswertungsvorrichtung 27 umfasst eine Recheneinheit 37 und eine Speichereinheit 38. In der Speichereinheit 38 sind mehrere Kontaminationsklassen K1, K2, K3, K4, K5 hinterlegt oder hinterlegbar, die unterschiedliche Verunreinigungsgrade VG definieren, welche vom Massegehalt an anorganischen Verunreinigungen in der Trockenmasse des Erntegutes 2 abhängig sind. Anorganische Verunreinigungen sind, insbesondere Sand, erdige Bestandteile wie Humus, sonstige Bodenbestandteile und/oder dergleichen mehr.

In nachstehender Tabelle ist eine exemplarische Klassifizierung gemäß Resch et. al. 2013 "Bedeutung des Eisengehaltes als Indikator für die Futterverschmutzung von Grünlandfuttermitteln" wiedergegeben. Neben dem Gehalt an Eisen wird der in der Trockenmasse des Erntegutes 2 enthaltene Sandanteil als Indikator für die Futterverschmutzung angeführt. Weitere Indikatoren können erdige Bestandteile wie Humus und/oder sonstige Bodenbestandteile sein. Jedem Verunreinigungsgrad VG ist eine Kontaminationsklasse K1, K2, K3, K4, K5 zugeordnet.

**Tabelle:**

| Kontaminationsklasse | Verunreinigungsgrad VG | Eisen [mg/kg TM] | Sandanteil [g/kg TM] |
|---|---|---|---|
| K1 | Sauber | Unter 400 | Unter 13 |
| K2 | Leicht | 400 bis 800 | 13 bis 19 |
| K3 | Mäßig | 800 bis 1500 | 19 bis 30 |
| K4 | Stark | 1500 bis 3000 | 30 bis 53 |
| K5 | Sehr stark | Über 3000 | Über 53 |

Der Maschinenlernalgorithmus umfasst zumindest ein trainierbares neuronales Netzwerk 42 zur Analyse der Bilder 41 des Erntegutstromes 21. Bevorzugt verwendet das zumindest eine neuronale Netzwerk 42 als Basis ein EfficientNet, insbesondere EfficientNetB0, als Architektur und Skalierungsmethode für faltungsneuronale Netze.

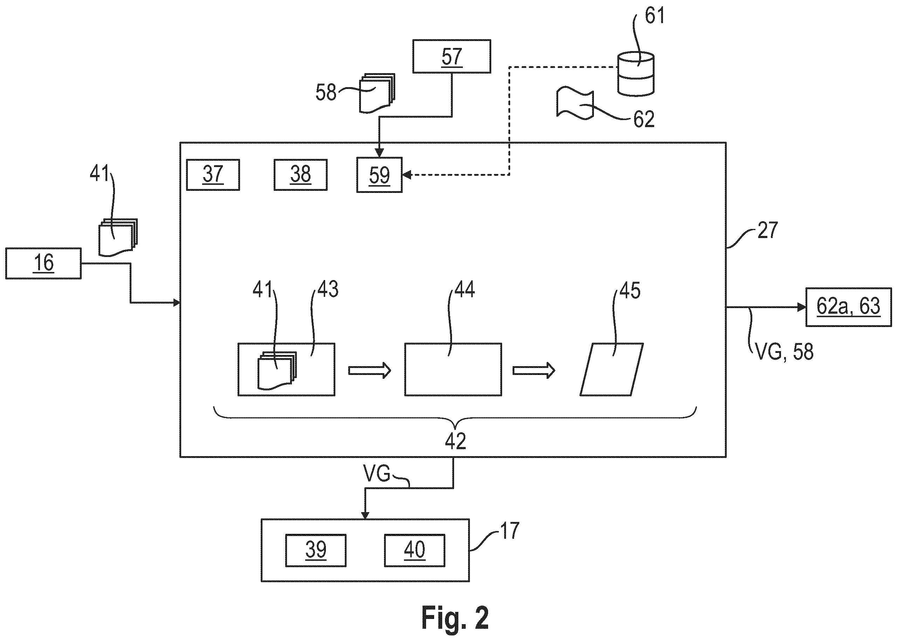

In Fig. 2 ist exemplarisch eine schematische Darstellung der Bildauswertungsvorrichtung 27 gezeigt. Gemäß der in Fig. 2 dargestellten Ausführungsform der Bildauswertungsvorrichtung 27 ist vorgesehen, dass das zumindest eine neuronale Netzwerk 42 zur Analyse der von dem Kamerasystem 16 empfangenen Bilder 41 einen direkten Algorithmus verwendet, welcher als Eingangsgröße 43 die Bilder 41 im Rohdatenformat verwendet, die direkt, d.h. ohne semantische Segmentierung, in einem Klassifizierungsschritt 44 einer Klassifizierung durch das zumindest eine neuronale Netzwerk 42 unterzogen werden und als Ausgangsgröße 45 eine der in der Speichereinheit 38 hinterlegten Kontaminationsklassen K1, K2, K3, K4, K5 bestimmt.

Weiterhin weist die Bildauswertungsvorrichtung 27 eine Kartierungseinheit 59 auf. Die Kartierungseinheit 59 empfängt von dem zumindest einen Positionsortungssensor 57 der Erntemaschine 1 Positionsdaten 58 zur fortlaufenden Bestimmung einer geografischen Position der Erntemaschine 1 auf dem zu bearbeitenden Feld 60.

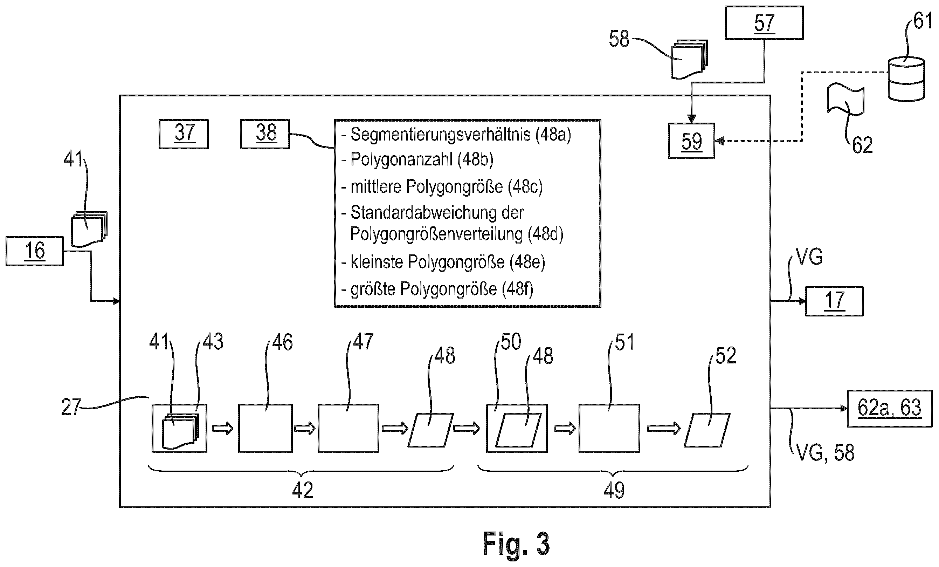

Die Darstellung in Fig. 3 zeigt exemplarisch eine schematische Darstellung der Bildauswertungsvorrichtung 27 gemäß einer alternativen Ausführung. Gemäß der alternativen Ausführung der Bildauswertungsvorrichtung 27 ist vorgesehen, dass das zumindest eine neuronale Netzwerk 42 zur Analyse der von dem Kamerasystem 16 empfangenen Bilder 41 einen hybriden Algorithmus verwendet, welcher als Eingangsgröße 43 die im Rohdatenformat empfangenen Bilder 41 verwendet, die einer semantischen Segmentierung durch ein Segmentierungsmodell 46 durch das neuronale Netzwerk 42 unterzogen werden und als Ausgangsgröße aus den pixelweise segmentierten Bildern 41 extrahierte Merkmale 48 generiert. Die als Ausgangsgrößen generierten Merkmale 48 des neuronalen Netzwerk 42 werden einem zweiten neuronalen Netzwerk 49 als Eingangsgrößen 50 zuführt, welches aus den extrahierten Merkmalen 48 in einem Klassifizierungsschritt 51 als Ausgangsgröße 52 eine der in der Speichereinheit 38 hinterlegten Kontaminationsklassen K1, K2, K3, K4, K5 bestimmt.

Hierzu ist vorgesehen, dass das neuronale Netzwerk 42 die von dem Kamerasystem 16 empfangenen Bilder 41 pixelweise segmentiert, indem jedem Pixel eine Klasse zugewiesen wird, welche als eine in der Speichereinheit 38 hinterlegte Eigenschaft definiert ist. Dabei kann als eine Klasse 55 die Eigenschaft "Boden" und als zumindest eine weitere Klasse 56 die Eigenschaft "Erntegut" hinterlegt sein.

In der Speichereinheit 38 hinterlegte extrahierte Merkmale 48 sind hier und vorzugsweise aus der Merkmalsgruppe Segmentierungsverhältnis 48a, Polygonanzahl 48b, mittlere Polygongröße 48c, Standardabweichung der Polygongrößenverteilung 48d, kleinste Polygongröße 48e und größte Polygongröße 48f. Die Polygone 53 werden dazu mittels eines Konturensuch-Algorithmus 47 bestimmt, der von dem neuronale Netzwerk 42 ausgeführt wird, um daraus die Merkmale 48 aus der vorstehend genannten Merkmalsgruppe zu extrahieren.

Das Merkmal 48 "Segmentierungsverhältnis 48a" beschreibt die Anzahl von als "Boden" klassifizierten Pixeln 55 im Verhältnis zur Gesamtanzahl an Pixeln 54 im Bild 41a. Das Merkmal 48 "Polygonanzahl 48b" beschreibt die Anzahl an als "Boden" klassifizierten Flächen. Das Merkmal 48 "mittlere Polygongröße 48c" beschreibt eine durchschnittliche Größe der Polynome 53. Das Merkmal 48 "kleinste Polygongröße 48e" gibt die Anzahl an Pixeln 54 der Klasse 55 des kleinsten bestimmten Polygons 53 wieder. Das Merkmal 48 "größte Polygongröße 48f" gibt die Anzahl an Pixeln 54 der Klasse 55 des größten bestimmten Polygons 53 wieder.

Bevorzugt kann das zweite neuronale Netzwerk 49 ein neuronales Netz mit einem Input-Layer, insbesondere nur einem Hidden-Layer und einem Output-Layer sein. Das zweite neuronale Netzwerk 49 kann für den auf die Klassifizierung beschränkten Vorgang als einfaches neuronales Netzwerk ausgeführt sein.

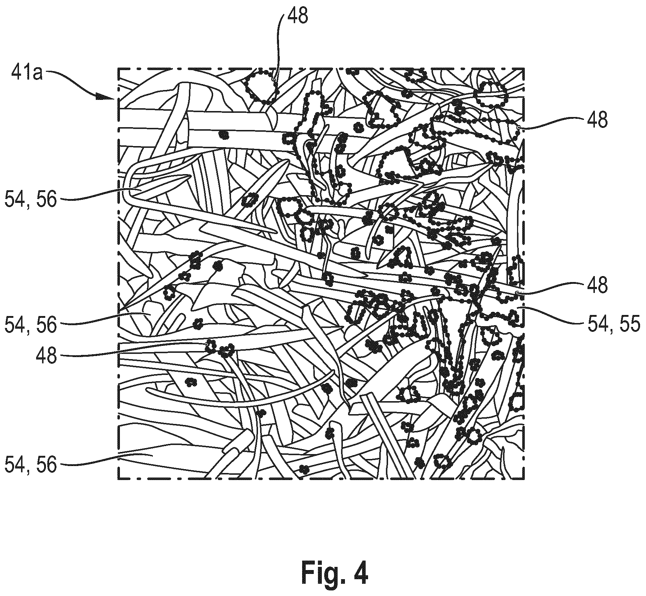

In Fig. 4 ist exemplarisch ein mittels des hybriden Algorithmus gemäß Fig. 3 durch das neuronale Netzwerk 42 segmentiertes Bild 41a dargestellt. Die im Rohdatenformat als Eingangsgröße 43 an das neuronale Netzwerk 42 übertragenen Bilder 41 werden durch das Segmentierungsmodell 46 pixelweise segmentiert. Jedem segmentierten Pixel 54 des Bildes 41a wird entweder die Klasse 55 mit der Eigenschaft "Boden" oder die weitere Klasse 56 mit der Eigenschaft "Erntegut" zugeordnet. In Fig. 4 umrandete Bereiche sind zusammenhängende Flächen von Pixeln 54, die der Klasse 55 mit der Eigenschaft "Boden" zugeordnet wurden. Mittels des Konturensuch-Algorithmus 47 werden auf Grundlage der zusammenhängenden Flächen von Pixeln 54, die der Klasse 55 mit der Eigenschaft "Boden" zugeordnet wurden, die Polygone 53 bestimmt. Aus den bestimmten Polygonen werden die Merkmale 48 als Ausgangsgröße des neuronalen Netzwerkes 42 extrahiert.

Das zweite neuronale Netzwerk 49 verarbeitet die extrahierten Merkmale 48 als Eingangsgröße 50 in dem Klassifizierungsschritt 51 und bestimmt als Ausgangsgröße 52 eine der in der Speichereinheit 38 hinterlegten Kontaminationsklassen K1, K2, K3, K4, K5.

Das neuronale Netzwerk 42 ist dazu eingerichtet, für die Bestimmung der Kontaminationsklasse K1, K2, K3, K4, K5 zumindest drei zeitlich aufeinanderfolgend empfangene Bilder 41a des Erntegutstroms 21 auszuwerten, wobei die Ausgabe der Ergebnisse als gewichteter Mittelwert erfolgt. Dadurch lässt sich, unabhängig davon, ob der direkte Algorithmus, welcher von dem neuronalen Netzwerk 42 alleine ausgeführt wird, oder der hybride Algorithmus, welcher von den beiden neuronalen Netzwerke 42 und 49 ausgeführt wird, verwendet wird, ein statistisch robuster Ausgabewert für die Ausgangsgröße 45 bzw. 52, d.h. die Zuordnung zu einer der in Tabelle 1 aufgeführten Kontaminationsklassen K1, K2, K3, K4, K5 und damit Verunreinigungsgrade VG, generieren.

Des Weiteren kann eine Auswahl eines der zumindest drei zeitlich aufeinanderfolgenden Bilder 41 des Erntegutstroms 21 erfolgen, für welches die Kontaminationsklasse K1, K2, K3, K4, K5 als Ausgangsgröße 45 bzw. 52 bestimmt werden soll, wobei das ausgewählte Bild 41 bei der Mittelwertbildung eine höhere Gewichtung aufweist als die zumindest zwei weiteren Bilder 41. Dabei kann das ausgewählte Bild 41 mit 40 % und die beiden anderen Bilder 41 können mit 30 % gewichtet werden. Vorzugsweise ist das ausgewählte Bild 41 das zweite Bild, der drei in zeitlicher Abfolge nacheinander aufgenommenen Bilder 41.

Die vorstehend beschriebene Erntemaschine 1 ist zu Durchführung des Verfahren zur Analyse von Inhaltsstoffen im Erntegut 2 eingerichtet. Das Erntegut 2 wird von der selbstfahrenden Erntemaschine 1 mit dem Vorsatzgerät 4 aufgenommen, durch die Arbeitsaggregate 20 der Erntemaschine 1 bearbeitet und durch die Überladevorrichtung 15 abgegeben. Es werden die Bilder 41 des die Erntemaschine 1 durchlaufenden Erntegutstromes 21 durch das an der Überladevorrichtung 15 angeordnetes Kamerasystem 16 erfasst und durch die Bildauswertungsvorrichtung 27 ausgewertet. Der im Erntegutstrom 21 enthaltene Anteil an anorganischen Verunreinigungen wird mittels des Maschinenlernalgorithmus unter Verwendung eines direkten oder hybriden Algorithmus analysiert. Das Vorsatzgerät 4 und/oder die Arbeitsaggregate 20 der selbstfahrenden Erntemaschine 1 werden in Abhängigkeit vom bestimmten Verunreinigungsgrad VG angesteuert. Hierfür kann vorzugsweise das Fahrerassistenzsystem 17 eingerichtet sein, welches die von der Bildauswertungsvorrichtung 27 generierten Ausgangsgrößen 45 bzw. 52 empfängt und daraus Steuersignale zur Ansteuerung ableitet.

Die Bildauswertungsvorrichtung 27 ist dazu eingerichtet, den ermittelten Anteil an detektierten Verunreinigungen georeferenziert unter Verwendung der Positionsdaten 58, die von dem zumindest einen Positionsortungssensor 57 der Erntemaschine 1 zur fortlaufenden Bestimmung der geografischen Position der Erntemaschine 1 auf dem zu bearbeitenden Feld 60 bereitgestellt werden, zu kartieren.

Hierzu ist die Kartierungseinheit 59 der Bildauswertungsvorrichtung 27 dazu eingerichtet, die von dem zumindest einen Positionsortungssensor 57 bereitgestellten Positionsdaten 58 mit der bestimmten Kontaminationsklasse K1, K2, K3, K4, K5 und/oder dem bestimmten Verunreinigungsgrad VG, die anhand der ermittelten Anteile an Verunreinigungen bestimmt werden, zu verknüpfen, die mit den Positionsdaten 58 korrelieren. Die korrelierenden Datensätze aus Kontaminationsklasse K1, K2, K3, K4, K5 und/oder Verunreinigungsgrad VG in Verbindung mit den Positionsdaten 58 werden in einer in der Speichereinheit 38 bereits hinterlegten Bestandskarte 62 oder in einer durch die Kartierungseinheit 59 zu generierenden Karte 63 aufgezeichnet.

Hierzu ist die Kartierungseinheit 59 der Bildauswertungsvorrichtung 27 dazu eingerichtet, von einer externen Datenquelle 61 eine bestehende Bestandskarte 62 des zu bearbeitenden Feldes 60 abzurufen, um diese zu aktualisieren. Alternativ oder zusätzlich kann die Kartierungseinheit 59 dazu eingerichtet sein, anhand der von dem zumindest einen Positionsortungssensor 57 bereitgestellten Positionsdaten 58 und/oder mittels einer optischen Erfassungsvorrichtung aufgezeichneten, von der Erntemaschine 1 abgefahrenen Fahrspuren 66 die Karte 63 des Feldes 60 neu zu erstellen. Die optische Erfassungseinrichtung kann an der Erntemaschine 1 angeordnet sein und/oder es kann ein maschinenfernes Sensorsystem, beispielsweise eine Drohne mit zumindest einer optischen Erfassungsvorrichtung, zum Einsatz kommen, um die abgefahrenen Fahrspur 66 zu detektieren und als Fahrspurdaten abzuspeichern.

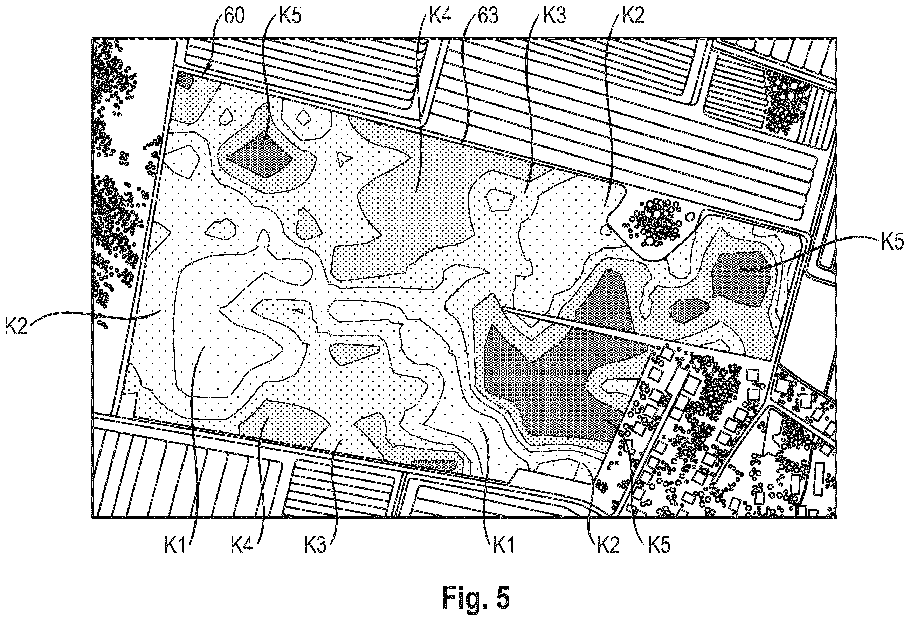

In Fig. 5 ist schematisch und exemplarisch eine mittels der Kartierungseinheit 59 erstellte und durch die Eingabe-Ausgabe-Einheit 18 ausgegebene Karte 63 dargestellt. Die Kartierungseinheit 59 ist dazu eingerichtet, die georeferenziert aufgezeichneten Verunreinigungen ihrer Zuordnung zu einer der bestimmten Kontaminationsklassen K1, K2, K3, K4, K5 und/oder dem bestimmten Verunreinigungsgrad VG entsprechend voneinander grafisch unterscheidbar darzustellen. Die Bildauswertungsvorrichtung 27 ist dazu eingerichtet, die von der Kartierungseinheit 59 erstellte Karte 63 bzw. eine aktualisierte Bestandskarte 62a mittels der Eingabe-Ausgabe-Einheit 18 auszugeben.

Einzelnen Flächenabschnitten des bearbeiteten Feldes 60 sind durch die Bildauswertungsvorrichtung 27 bestimmte unterschiedliche Kontaminationsklassen K1, K2, K3, K4, K5 zugeordnet. Die Kartierungseinheit 59 ist dazu eingerichtet ist, die georeferenziert aufgezeichneten Verunreinigungen ihrer Zuordnung zu einer der bestimmten Kontaminationsklassen K1, K2, K3, K4, K5 und/oder dem bestimmten Verunreinigungsgrad VG entsprechend voneinander grafisch unterscheidbar darzustellen. Dies kann beispielsweise durch eine farblich abgestufte Darstellung erfolgen, die beispielsweise entsprechend der Anzahl der Kontaminationsklassen K1, K2, K3, K4, K5 von zwei unterschiedlichen Grüntönen ausgehend über gelb nach orange und rot changiert.

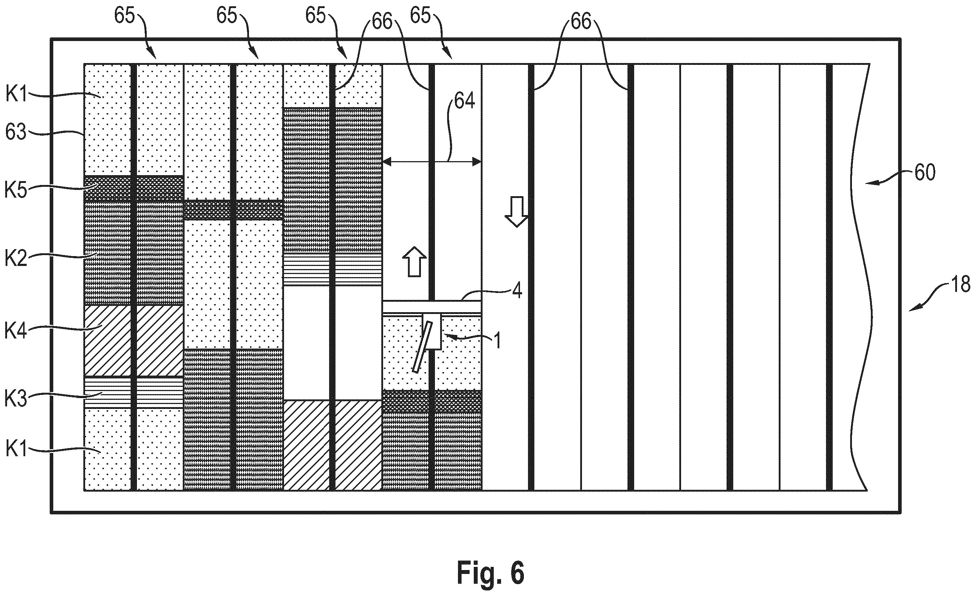

Die Darstellung in Fig. 6 zeigt schematisch und exemplarisch eine Darstellung einer durch die Eingabe-Ausgabe-Einheit 18 ausgegebenen Teilansicht des Feldes 60 während des Bearbeitungsvorgangs durch die Erntemaschine 1. Die Darstellung des Feldes 60 ist lediglich aus Gründen der Veranschaulichung stark vereinfacht. Die verschiedenen Kontaminationsklassen K1, K2, K3, K4, K5 sind in Fig. 6 durch unterschiedliche Füllmuster gekennzeichnet. Bevorzugt ist die farblich abgestufte Darstellung der Kontaminationsklassen K1, K2, K3, K4, K5, welche die visuelle Interpretation der Bestimmung der Verunreinigungsgrade VG entlang der abgefahrenen Fahrspuren 66 vereinfacht.

Die Kartierungseinheit 59 kann dazu eingerichtet sein, die georeferenziert aufgezeichneten Verunreinigungen ihrer Zuordnung zu einer der bestimmten Kontaminationsklassen K1, K2, K3, K4, K5 entsprechend in Abhängigkeit von einer Arbeitsbreite 64 des Vorsatzgerätes 4 zu segmentieren und einzelne Segmente 65 voneinander grafisch unterscheidbar in der Karte 63 darzustellen. Die Bedienperson der Erntemaschine 1 erhält somit die Möglichkeit, bereits während des Bearbeitungsvorganges des Feldes 60 das Ergebnis der Bildauswertungsvorrichtung 27, den georeferenziert ermittelten Anteil an detektierten Verunreinigungen respektive den Verunreinigungsgrad VG und/oder die Kontaminationsklasse K1, K2, K3, K4, K5 nahezu in Echtzeit angezeigt zu bekommen.

Die abgefahrenen Fahrspuren 66 können, wie weiter oben ausgeführt, durch die optische Erfassungseinrichtung an der Erntemaschine 1 und/oder durch ein maschinenfernes Sensorsystem als Fahrspurdaten erfasst werden. In Verbindung mit den Positionsdaten 58 lässt sich somit eine aktualisierte Bestandskarte 62a erstellen oder eine Karte 63 neu generieren.

Die Kartierungseinheit 59 ist dazu eingerichtet, die aktualisierte Bestandskarte 62a oder die neu erstellte Karte 63, in welcher der ermittelte Anteil an Verunreinigungen georeferenziert aufgezeichnet wurde, an eine Datenverarbeitungsvorrichtung einer anderen landwirtschaftlichen Arbeits- und/oder Erntemaschine, welche das Feld 60 nachfolgend bearbeitet, und/oder an ein Farmmanagementsystem zur Planung von nachfolgenden Bearbeitungsschritten zu übertragen. Hierdurch kann eine nachfolgende Bearbeitung auf das Ergebnis der Bestimmung der Verunreinigungsgrade VG und/oder Kontaminationsklassen K1, K2, K3, K4, K5 angepasst werden.

So lassen sich für eine nachfolgende Ernteperiode proaktiv Maßnahmen ableiten, die zu einer Reduzierung der Verunreinigung des Erntegutes beitragen. Hierzu zählt insbesondere die Anpassung von Betriebsparametern der landwirtschaftlichen Arbeitsmaschinen, welche in der Zeit vor der Durchführung des Erntevorgangs durch die Erntemaschine 1 das Feld 60 bearbeiten.

**Bezugszeichenliste**

| | | | |
|---|---|---|---|
| 1 | Erntemaschine | 33 | Pfeil |
| 2 | Erntegut | 34 | Förderpumpe |
| 3 | Aufnahmevorrichtung | 35 | Oberseite |
| 4 | Vorsatzgerät | 36 | Feldboden |
| 5 | Einzugseinrichtung | 37 | Recheneinheit |
| 6 | Walzenpaar | 38 | Speichereinheit |
| 7 | Walzenpaar | 39 | Speicher |
| 8 | Häckselvorrichtung | 40 | Rechenvorrichtung |
| 9 | Häckseltrommel | 41 | Bilder |
| 10 | Gegenschneide | 41a | Segmentiertes Bild |
| 11 | Crackerwalzen | 42 | Neuronales Netzwerk |
| 12 | Spalt | 43 | Eingangsgröße |
| 13 | Nachzerkleinerungsvorrichtung | 44 | Klassifizierungsschritt |
| 14 | Nachbeschleuniger | 45 | Ausgangsgröße |
| 15 | Auswurfkrümmer | 46 | Segmentierungsmodell |
| 16 | Kamerasystem | 47 | Konturensuch-Algorithmus |
| 17 | Fahrerassistenzsystem | 48 | Merkmal |
| 18 | Eingabe-Ausgabe-Einheit | 48a | Segmentierungsverhältnis |
| 19 | Fahrerkabine | 48b | Polygonanzahl |
| 20 | Arbeitsaggregat | 48c | Mittlere Polygongröße |
| 21 | Erntegutstrom | 48d | Standardabweichung der Polygongrößenverteilung |
| 22 | NIR-Sensor | 48e | Kleinste Polygongröße |
| 23 | Körner | 48f | Größte Polygongröße |
| 24 | Zerkleinerte Körner | 49 | Zweites neuronales Netzwerk |
| 25 | Kornbestandteile | 50 | Eingangsgröße |
| 26 | Nicht-Kornbestandteile | 51 | Klassifizierungsschritt |
| 27 | Bildauswertungsvorrichtung | 52 | Ausgangsgröße |
| 28 | Trommelboden | 53 | Polygon |
| 29 | Auswurfkanal | 54 | Pixel |
| 30 | Wandung | 55 | Klassifizierte Pixel |
| 31 | Siliermitteldosiervorrichtung | 56 | Klassifizierte Pixel |
| 32 | Kamera | 57 | Positionsortungssensor |
| 58 | Positionsdaten | | |
| 59 | Kartierungseinheit | | |
| 60 | Feld | | |
| 61 | Externen Datenquelle | | |
| 62 | Bestandskarte | | |
| 62a | Aktualisierte Bestandskarte | | |
| 63 | Karte | | |
| 64 | Arbeitsbreite | | |
| 65 | Segment | | |
| 66 | Fahrspur | | |
| K1 | Kontaminationsklasse | | |
| K2 | Kontaminationsklasse | | |
| K3 | Kontaminationsklasse | | |
| K4 | Kontaminationsklasse | | |
| K5 | Kontaminationsklasse | | |
| VG | Verunreinigungsgrad | | |

## Patentansprüche

1. Selbstfahrende Erntemaschine (1), wobei die Erntemaschine (1) ein Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeiteten Erntegutes (2) sowie ein Kamerasystem (16) zur Erfassung von Bildern (41) eines die Erntemaschine (1) durchlaufenden Erntegutstromes (21) und eine Bildauswertungsvorrichtung (27) zur Auswertung der Bilder (41) umfasst, wobei die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an Verunreinigungen zu analysieren, **dadurch gekennzeichnet, dass** die Bildauswertungsvorrichtung (27) dazu eingerichtet ist, den ermittelten Anteil an detektierten Verunreinigungen georeferenziert unter Verwendung von Positionsdaten (58), die ein Positionsortungssensor (57) der Erntemaschine (1) zur fortlaufenden Bestimmung einer geografischen Position auf einem zu bearbeitenden Feld (60) bereitstellt, zu kartieren.

2. Selbstfahrende Erntemaschine (1) nach Anspruch 1, **dadurch gekennzeichnet, dass** die Bildauswertungsvorrichtung (27) dazu eingerichtet ist, einen im Erntegutstrom (21) enthaltenen Anteil an Verunreinigungen mittels eines Maschinenlernalgorithmus zu analysieren, wobei der Maschinenlernalgorithmus zumindest ein trainierbares neuronales Netzwerk (42) zur Analyse der Bilder (41) umfasst.

3. Selbstfahrende Erntemaschine (1) nach Anspruch 2, **dadurch gekennzeichnet, dass** das zumindest eine neuronale Netzwerk (42) zur Analyse der von dem Kamerasystem (16) empfangenen Bilder (41) einen direkten Algorithmus verwendet, welcher als Eingangsgröße (43) die Bilder (41) im Rohdatenformat verwendet, die Bilder (41) direkt einer Klassifizierung durch das zumindest eine neuronale Netzwerk (42) unterzieht und als Ausgangsgröße (45) eine Kontaminationsklasse (K1, K2, K3, K4, K5) bestimmt.

4. Selbstfahrende Erntemaschine (1) nach Anspruch 2, **dadurch gekennzeichnet, dass** das zumindest eine neuronale Netzwerk (42) zur Analyse der von dem Kamerasystem (16) empfangenen Bilder (41) einen hybriden Algorithmus verwendet, welcher als Eingangsgröße (43) die Bilder (41) im Rohdatenformat verwendet, die Bilder (41) einer semantischen Segmentierung durch das neuronale Netzwerk (42) unterzieht und als Ausgangsgröße aus pixelweise segmentierten Bildern (41a) extrahierte Merkmale (48) einem zweiten neuronalen Netzwerk (49) als Eingangsgrößen (50) zuführt, welches aus den extrahierten Merkmalen (48) als Ausgangsgröße (52) eine der Kontaminationsklassen (K1, K2, K3, K4, K5) bestimmt.

5. Selbstfahrende Erntemaschine (1) nach Anspruch 4, **dadurch gekennzeichnet, dass** das zumindest eine neuronale Netzwerk (42) die von dem Kamerasystem (16) empfangenen Bilder (41) pixelweise segmentiert, indem jedem Pixel (54) eine Klasse zugewiesen wird, welche als eine in der Bildauswertungsvorrichtung (27) hinterlegte Eigenschaft definiert ist, wobei als eine Klasse die Eigenschaft "Boden" und als zumindest eine weitere Klasse die Eigenschaft "Erntegut" hinterlegt sind.

6. Selbstfahrende Erntemaschine (1) nach Anspruch 4 oder 5, **dadurch gekennzeichnet, dass** in der Speichereinheit (38) hinterlegte extrahierte Merkmale (48) aus der Gruppe Segmentierungsverhältnis (48a), Polygonanzahl (48b), mittlere Polygongröße (48c), Standardabweichung der Polygongrößenverteilung (48d), kleinste Polygongröße (48e) und größte Polygongröße (48f) sind.

7. Selbstfahrende Erntemaschine (1) nach Anspruch 4 bis 6, **dadurch gekennzeichnet, dass** das zweite neuronale Netzwerk (49) ein neuronales Netz mit einem Input-Layer, einem Hidden-Layer und einem Output-Layer ist.

8. Selbstfahrende Erntemaschine (1) nach einem der Ansprüche 4 bis 7, **dadurch gekennzeichnet, dass** das zumindest eine neuronale Netzwerk (42, 49) für die Bestimmung der Kontaminationsklasse (K1, K2, K3, K4, K5) zumindest drei zeitlich aufeinanderfolgend empfangene Bilder (41) des Erntegutstroms (21) auswertet, wobei die Ausgabe der Ergebnisse als gewichteter Mittelwert erfolgt, wobei eine Auswahl eines der zumindest drei zeitlich aufeinanderfolgenden Bilder (41) des Erntegutstroms (21) erfolgt, für welches die Kontaminationsklasse (K1, K2, K3, K4, K5) bestimmt werden soll, wobei das ausgewählte Bild (41) bei der Mittelwertbildung eine höhere Gewichtung aufweist als die zumindest zwei weiteren Bilder (41).

9. Selbstfahrende Erntemaschine (1) nach einem der vorangehenden Ansprüche, **dadurch gekennzeichnet, dass** die Bildauswertungsvorrichtung (27) eine Recheneinheit (37), eine Speichereinheit (38) sowie eine Kartierungseinheit (59) umfasst, wobei in der Speichereinheit (38) mehrere Kontaminationsklassen (K1, K2, K3, K4, K5) hinterlegt sind, die unterschiedliche Verunreinigungsgrade (VG) definieren, welche vom Massegehalt an anorganischen Verunreinigungen in der Trockenmasse des Erntegutes (2) abhängig sind, wobei die Kartierungseinheit (59) die von dem Positionsortungssensor (57) bereitgestellten Positionsdaten (58) mit der bestimmten Kontaminationsklasse (K1, K2, K3, K4, K5) und/oder dem bestimmten Verunreinigungsgrad (VG) verknüpft, die mit den Positionsdaten (58) korrelieren, und in einer in der Speichereinheit (38) hinterlegten oder in einer durch die Kartierungseinheit (59) zu aktualisierenden Bestandskarte (62a) oder einer zu generierenden Karte (63) aufzeichnet.

10. Selbstfahrende Erntemaschine (1) nach einem der vorangehenden Ansprüche, **dadurch gekennzeichnet, dass** die zu detektierenden anorganischen Verunreinigungen Sand, erdige Bestandteile wie Humus und/oder sonstige Bodenbestandteile umfassen.

11. Selbstfahrende Erntemaschine (1) nach einem der Ansprüche 9 oder 10, **dadurch gekennzeichnet, dass** die Kartierungseinheit (59) dazu eingerichtet ist, von einer externen Datenquelle eine bestehende Karte (62) des zu bearbeitenden Feldes (60) abzurufen oder anhand der von dem Positionsortungssensor (57) bereitgestellten Positionsdaten (58) und/oder mittels einer optischen Erfassungsvorrichtung aufgezeichneten abgefahrenen Fahrspuren (66) eine Karte (63) des Feldes (60) zu erstellen.

12. Selbstfahrende Erntemaschine (1) nach einem der Ansprüche 9 bis 11, **dadurch gekennzeichnet, dass** die Kartierungseinheit (59) dazu eingerichtet ist, die georeferenziert aufgezeichneten Verunreinigungen ihrer Zuordnung zu einer der bestimmten Kontaminationsklassen (K1, K2, K3, K4, K5) und/oder dem bestimmten Verunreinigungsgrad (VG) entsprechend voneinander grafisch unterscheidbar darzustellen.

13. Selbstfahrende Erntemaschine (1) nach einem der Ansprüche 9 bis 12, **dadurch gekennzeichnet, dass** die Kartierungseinheit (59) dazu eingerichtet ist, die georeferenziert aufgezeichneten Verunreinigungen ihrer Zuordnung zu einer der bestimmten Kontaminationsklassen (K1, K2, K3, K4, K5) und/oder dem bestimmten Verunreinigungsgrad (VG) entsprechend in Abhängigkeit von einer Arbeitsbreite (64) des Vorsatzgerätes (4) zu segmentieren und einzelne Segmente (65) voneinander grafisch unterscheidbar in der aktualisierten Bestandskarte (62a) oder der generierten Karte (63) darzustellen.

14. Selbstfahrende Erntemaschine (1) nach einem der Ansprüche 9 bis 13, **dadurch gekennzeichnet, dass** die Kartierungseinheit (59) dazu eingerichtet ist, die Karte (62a, 63), in welcher der ermittelte Anteil an Verunreinigungen georeferenziert aufgezeichnet wurde, an eine Datenverarbeitungsvorrichtung einer anderen landwirtschaftlichen Arbeits- und/oder Erntemaschine, welche das Feld (60) nachfolgend bearbeitet, und/oder an ein Farmmanagementsystem zur Planung von nachfolgenden Bearbeitungsschritten zu übertragen.

15. Verfahren zur Kartierung von im Erntegut (2) enthaltenen oder beim Aufnehmen des Erntegutes aufgenommen Verunreinigungen beim Bearbeiten eines Feldes, wobei das Erntegut durch die selbstfahrende Erntemaschine (1) mittels eines Vorsatzgerätes (4) aufgenommen, durch Arbeitsaggregate (20) der Erntemaschine (1) bearbeitet und durch eine Überladevorrichtung (15) abgegeben wird, wobei Bilder (41) eines die Erntemaschine (1) durchlaufenden Erntegutstromes (21) durch ein an der Überladevorrichtung (15) angeordnetes Kamerasystem (16) erfasst und durch eine Bildauswertungsvorrichtung (27) ausgewertet werden, wobei die Bilder (41) des Erntegutstroms (21) durch die Bildauswertungsvorrichtung (27) auf einen mit der Aufnahme durch das Vorsatzgerät (4) aufgenommenen, im Erntegutstrom (21) enthaltenen Anteil an Verunreinigungen analysiert werden, **dadurch gekennzeichnet, dass** der ermittelte Anteil an detektierten Verunreinigungen durch eine Kartierungseinheit (59) unter Verwendung von Positionsdaten (58), die ein Positionsortungssensor (57) der Erntemaschine (1) zur fortlaufenden Bestimmung einer geografischen Position auf einem zu bearbeitenden Feld (60) bereitstellt, georeferenziert kartiert wird.
